(19) Europäisches Patentamt
European Patent Office
Office européen des brevets

(11) Veröffentlichungsnummer : **0 323 401 B1**

(12) **EUROPÄISCHE PATENTSCHRIFT**

(45) Veröffentlichungstag der Patentschrift :
**15.04.92 Patentblatt 92/16**

(51) Int. Cl.$^5$ : **C09B 67/26,** D06P 1/36, D06P 1/62, // D06P3/20

(21) Anmeldenummer : **88810853.7**

(22) Anmeldetag : **09.12.88**

(54) **Wässrige Dispersion eines metallisierbaren Farbstoffes.**

(30) Priorität : **18.12.87 CH 4956/87**

(43) Veröffentlichungstag der Anmeldung :
**05.07.89 Patentblatt 89/27**

(45) Bekanntmachung des Hinweises auf die Patenterteilung :
**15.04.92 Patentblatt 92/16**

(84) Benannte Vertragsstaaten :
**BE CH DE ES FR GB IT LI NL**

(56) Entgegenhaltungen :
**DE-A- 2 101 222**
**FR-A- 2 152 752**
**FR-A- 2 205 506**

(73) Patentinhaber : **CIBA-GEIGY AG**
**Klybeckstrasse 141**
**CH-4002 Basel (CH)**

(72) Erfinder : **Galli, Roberto, Dr.**
**Eremitagestrasse 3**
**CH-4153 Reinach (CH)**
Erfinder : **Tempel, Ernst, Dr.**
**Kilchgrundstrasse 45**
**CH-4125 Riehen (CH)**

**EP 0 323 401 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft eine wässrige Dispersion eines sulfonierten, metallisierbaren Farbstoffes, Verfahren zu deren Herstellung und ihre Verwendung zum Färben von Carbonamidgruppenhaltigen Fasern wie synthetische Polyamidfasern, Leder und insbesondere Wolle in der Kreuzspulfärbung.

Die erfindungsgemässe wässrige Dispersion ist dadurch gekennzeichnet, dass sie

(a) bezogen auf das Gesamtgewicht mindestens 10 % des sulfonierten, metallisierbaren Farbstoffes und

(b) ein sulfoniertes Kondensationsprodukt, welches durch Umsetzung einer mindestens zwei ersetzbare kernständige Wasserstoffatome aufweisenden aromatischen Verbindung in beliebiger Reihenfolge mit einer Verbindung der Formel

(1) 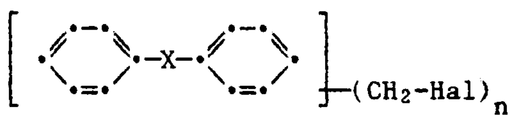

worin X die direkte Bindung oder Sauerstoff,

Hal Chlor oder Brom und

n 1 bis 4 bedeuten

und Sulfonierung erhalten worden ist, enthält.

Bei der erfindungsgemässen Farbstoffdispersion handelt es sich in erster Linie um eine lagerstabile, flüssige Handelsform eines Nachchromierfarbstoffes d.h. eines Farbstoffes, der zur Metallkomplexbildung geeignete Gruppierungen enthält und wobei die Chromierung während oder nach dem Färben erfolgt. Als derartige Farbstoffe kommen die üblichen Beizenfarbstoffe in Betracht, beispielsweise die in Colour Index Band 3 (3. Auflage, 1971) auf den Seiten 3001-3224 genannten "Mordant Dyes". Bevorzugte Farbstoffe sind Mordant Blacks, besonders Mordant Black 11 C.I. 14645. Ebenso können Mischungen dieser Beizenfarbstoffe verwendet werden.

Vorzugsweise enthält die erfindungsgemässe Flüssigformulierung den Farbstoff in Mengen von 20 bit 60, insbesondere 25 bis 40 Gewichtsprozent, bezogen auf das Gesamtgewicht der Formulierung.

Die als Komponente (b) verwendbaren sulfonierten Kondensationsprodukte entsprechen vorzugsweise der Formel

(2) 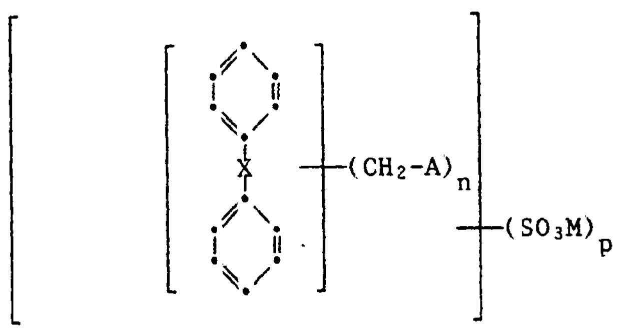

in der X die direkte Bindung oder Sauerstoff, A den Rest einer aromatischen Verbindung, welcher mittels eines Ringkohlenstoffatoms an die Methylengruppe gebunden ist, M Wasserstoff oder ein Kation z.B. Alkalimetall, Erdalkalimetall, Ammoniumgruppe und n und p je eine Zahl von 1 bis 4 bedeuten.

Dabei stehen n und p vorzugsweise für 1 oder 2, oder sie können auch je eine beliebige gebrochene Zahl von 1 bis 4 bedeuten z.B. 1,4, 1,8, 2,1 oder 3,2.

Der erfindungsgemäss verwendbaren sulfonierten Kondensationsprodukte werden zweckmässig hergestellt, indem man eine mindestens zwei ersetzbare kernständige Wasserstoffatome aufweisende aromatische Verbindung mit einer Verbindung der Formel (1) umsetzt und das Kondensationsprodukt sulfoniert. Man kann kondensationsprodukte der angegebenen Art auch herstellen, indem man eine sulfonierte, mindestens zwei ersetzbare, kernständige Wasserstoffatome aufweisende aromatische Verbindung mit einer Verbindung der Formel (1) umsetzt.

Die bei der Herstellung der Kondensationsprodukte als Ausgangsstoffe dienenden, mindestens zwei ersetzbare Wasserstoffatome aufweisenden aromatischen Verbindungen können ein- oder mehrkernige,

besonders zweikernige Kohlenwasserstoffe sein, die gegebenenfalls substituiert sind. Als Substituenten kommen z.B. Hydroxyl, Alkylgruppen mit 1 bis 4 Kohlenstoffatomen, Alkoxygruppen mit 1 bis 4 Kohlenstoffatomen oder Halogen, wie z.B. Chlor in Betracht. Bevorzugt sind Naphthalinverbindungen, die mit Hydroxyl, Chlor oder Methyl substituiert sein können. Als Beispiele für ein- und mehrkernige aromatische Verbindungen seien hier genannt:

Alkylbenzole, wie z.B. Toluol, Xylole, Isopropylbenzol, Isobutylbenzol, tert.Butylbenzol; Phenol, Chlorphenole, Alkylphenole, wie z.B. Methylphenol, Dimethylphenol, Isopropylphenol oder tert.Butylphenol, Hydroxydiphenyle; Alkoxybenzole, wie z.B. Anisole, Phenetole, Butoxybenzol, Diphenylalkane, Hydroxydiphenylalkane, Tetrahydronaphthalin, Naphthalin, α- und ß-Naphthol, Alkylnaphthaline, z.B. α- und ß-Methylnaphthalin, sowie Acenaphthen, Anthracen, Perylen, Pyren, Dihydrophenanthren oder Phenanthren. Besonders gut geeignet ist Naphthalin, das auch bereits sulfoniert sein kann. Selbstverständlich können auch Gemische dieser ein- und mehrkernigen aromatischen Verbindungen als Ausgangsstoffe verwendet werden.

Die ebenfalls als Ausgangsstoffe benötigten Verbindungen der Formel (1) werden z.B. durch Umsetzung von Diphenyl oder Diphenylether mit Formaldehyd und Halogenwasserstoff, wie Brom- oder vorzugsweise Chlorwasserstoff nach den in der U.S. Patentschrift 3 004 072 oder italienischen Patentschrift 600 214 beschriebenen Methoden hergestellt.

Bevorzugte Ausgangsstoffe der Formel (1) sind Chlormethyldiphenyl und Chlormethyldiphenylether. Bei diesen Verbindungen handelt es sich meistens um Isomerengemische mit 1 bis 3 Chlormethylgruppen, wobei sich z.B. die Chlormethylgruppen vorzugsweise in o- und p-Stellung der beiden Benzolringe befinden. Demnach liegen auch die entsprechenden sulfonierten Kondensationsprodukte in der Regel als Gemische vor, insbesondere von mono- bis trisubstituierten Diphenyl-oder Diphenyletherprodukten. Je nach den Ausgangsmaterialien und den gewählten Reaktionsbedingungen bei der Herstellung der Kondensationsprodukte ändert sich das Verhältnis der Isomeren zueinander. Sofern n gleich 1 ist, werden p-Isomere in Anteilen von z.B. 30 bis 90 % und o-Isomere in Anteilen von z.B. 70 bis 10 % erhalten. Sofern n gleich 2 ist, erhält man z.B. p,p′-, o,o′- oder o,p′-Verbindungen. Diese sulfonierten Kondensationsprodukte sind aus der DE-A-23 53 691 bekannt.

Die erfindungsgemässe Farbstoffdispersion enthält zweckmässigerweise mindestens 5 Gewichtsteile sulfoniertes Kondensationsprodukt je 100 Gewichtsteile Farbstoff. Es sind jedoch bevorzugt 15 bis 40 Gewichtsteile zu verwenden, um eine stabile und konzentrierte Farbstofformulierung zu erreichen und gleichzeitig Verdickungen beim Dispergieren und Mahlen zu vermeiden. Besonders bevorzugt sind 15 bis 25 Gewichtsteile.

Obwohl die beschriebenen Mischungen bereits zufriedenstellend sind, können sie zusätzlich auch weitere anionische Dispergiermittel enthalten.

Als zusätzliche Dispergiermittel eignen sich beispielsweise

– Kondensationsprodukte, die aus phenolischen und/oder sulfonierten Aromaten mit Formaldehyd erhältlich sind, wobei die Sulfonierung vor oder nach der Kondensation durchgeführt sein kann.

– Kondensationsprodukte von Naphthalinsulfonsäure und/oder Naphthol-oder Naphthylaminsulfonsäure mit Formaldehyd.

– Kondensationsprodukte von Phenolsulfonsäuren und/oder Phenolen mit Formaldehyd und Harnstoff.

– Kondensationsprodukte aus Phenolen, Naphtholsulfonsäuren, Natriumsulfit und Formaldehyd, insbesondere aus Kresol, 2-Naphthol-6-sulfonsäure, Natriumsulfit und Formaldehyd (Fiat Report 1013).

– Kondensationsprodukte aus sulfogruppenhaltigen einkernigen Phenolen und Formaldehyd.

– Kondensationsprodukte aus zweikernigen, nicht kondensierten, mono-oder bifunktionellen Phenolen und Formaldehyd.

– Kondensationsprodukte aus sulfogruppenfreien einkernigen Phenolen, Formaldehyd und Sulfit.

Das Gewichtsverhältnis von sulfoniertem Kondensationsprodukt (Komponente (b)) zu zusätzlichem anionischem Dispergiermittel beträgt zweckmässigerweise 10:1 bis 2:1, vorzugsweise 6:1 bis 3:1.

Zur Einstellung des pH-Wertes und zur Verbesserung der Eigenschaften der erfindungsgemässen Dispersionen können weitere verschiedene Zusätze verwendet werden. Diese Formulierung enthält somit in solcher Menge (zweckmässigerweise 0 bis 5 %, vorzugsweise 0,05 bis 1 %) Natriumhydrogensulfat, dass der pH-Wert der Formulierung in der Regel 1 bis 4, vorzugsweise 1,5 bis 3 beträgt.

Ferner kann die Formulierung Alkylenglykole, insbesondere 1,2-Propylenglykol und zwar vorteilhafterweise in einer Menge von 1 bis 20 Gewichtsprozent, vorzugsweise 3 bis 10 Gew. %, und Elektrolyte (z.B. Natriumchlorid oder Natriumsulfat), Harnstoff, Schaumverhütungsmittel und/oder Verdicker enthalten. Sie kann bis ca. 10 Gewichtsprozent, vorzugsweise jedoch höchstens 1,5 Gewichtsprozent dieser letztgenannten Zusätze enthalten.

Die neue Flüssigformulierung stellt eine echte Dispersion dar. Sie ist konzentriert an Farbstoff, ist bei einer Viskosität von weniger als 2500 mPa.s (12 UpM.) bei 25°C giess- und dosierbar, ist largerstabil über mehrere Monate und in jedem Verhältnis mischbar mit kaltem und warmem Wasser.

Die Herstellung der erfindungsgemässen Farbstoffdispersion kann direkt aus dem Farbstoffpresskuchen erfolgen, der den Farbstoff in Form eines Alkalimetallsalzes oder teilweise auch in Form der freien Säure enthält, und erfolgt z.B. derart, dass man den definitionsgemässen metallisierbaren Farbstoff, bevorzugt als Natriumsalz, entweder als pure Ware oder vorzugsweise als wässrigen Presskuchen bei 20 bis 70°C, vorzugsweise bei Raumtemperatur, einer wässrigen Lösung des definitionsgemässen sulfonierten Kondensationsproduktes, wobei die Lösung auch allfällige weitere Zusätze enthält, zugibt und mit einem Rührer zweckmässigerweise 30 Minuten bis 2 Stunden dispergiert. Gewünschtenfalls kann der Farbstoff, bevorzugt als Natriumsalz und in Form eines wässrigen Presskuchens bei Raumtemperatur mit Wasser vermischt, vorübergehend auf 40 bis 70°C erwärmt und vor oder nach der Abkühlung, jedoch vorzugsweise nach der Abkühlung, mit dem definitionsgemässen sulfonierten Kondensationsprodukt und allfälligen weiteren Zusätzen versetzt und mit einem Rührer zweckmässigerweise 30 Minuten bis 2 Stunden dispergiert werden.

Bei grobkörnigen Farbstoffpresskuchen kann nach dem Dispergieren mittels Glasperlen nassgemahlen werden.

Verwendung findet die erfindungsgemässe Flüssigformulierung, gegebenenfalls nach dem Verdünnen mit Wasser, insbesondere zum Färben von Wolle. Nach einheitlicher Verteilung des Farbstoffes in dem zu färbenden Fasermaterial fixiert man den Farbstoff durch fortschreitendes Erhitzen und metallisiert mit Hilfe von polyvalenten Metallsalzen, vorzugsweise Chromsalzen, von denen die bekanntesten die trivalenten oder hexavalenten Chromsalze sind, zur Erzielung der erwünschten Nass-und Lichtechtheiten.

Es ist bereits bekannt, wässrige Dispersionen von metallisierbaren Azofarbstoffen, die in neutralen oder sauren Medien unlöslich oder nur sehr wenig löslich sind anzuwenden. Die zur Durchführung dieser Verfahren verwendeten Farbstoffe bleiben pratitisch bei Kälte und Wärme entweder unlöslich oder zeigen bei Wärme eine ungenügende Löslichkeit.

Ueberraschenderweise hingegen weisen die erfindungsgemässen Farbstoffformulierungen, obschon sie bei Kälte in einem bestimmten pH-Bereich unlöslich sind, bei Wärme eine deutlich bessere Löslichtieit auf. Sie ziehen somit gleichmässig, insbesondere endengleich, auf die Faser auf und ergeben echte, insbesondere reibechte Färbungen.

In den folgenden Beispielen beziehen sich die angegebenen Prozentsätze, wenn nicht anderes angegeben ist, auf das Gewicht.

Beispiel 1:

In einem Gefäss mit Rührer werden
12 g Biphenylmethyl-naphthalin-sulfonsäure als Natriumsalz,
8 g 1,2-Propylenglykol,
0,2 g 2,4,7,9-Tetramethyl-5-decin-4,7-diol und 0,6 g Natriumhvdrogensulfat in 67 g Wasser vorgelegt. Alsdann werden portionenweise 112 g eines wässrigen Presskuchens enthaltend 56 g des Farbstoffes Mordant Black 11 C.I. 14645 zugegeben und während 90 Minuten mit einem Rührer dispergiert.

Nach Filtration durch ein 400µm-Stahlsieb erhält man 180 g einer homogenen, lagerstabilen Flüssigformulierung, welche einen pH-Wert von 1,9 und eine Viskosität bei Raumtemperatur (25°C)112 Umdrehungen per Minute (UpM) von weniger als 2000 mPa.s aufweist. Diese Flüssigformulierung eignet sich für die Färbung von Wolle.

Das Natriumsalz der Biphenylmethyl-naphthalinsulfonsaure wird gemäss DE-A-23 53 691, Beispiel 3, wie folgt hergestellt:
64 g Naphthalin werden auf 70°C erhitzt. Unter Rühren lässt man gleichzeitig 65 g Schwefelsäuremonohydrat und 65 g eines Chlormethyldiphenylgemisches bestehend aus

7 % o-Chlormethyldiphenyl,
22 % p-Chlormethyldiphenyl,
10 % o,o′-Bis-chlormethyldiphenyl,
25 % o,p′-Bis-chlormethyldiphenyl,
7 % p,p′-Bis-chlormethyldiphenyl und
29 % höheren Isomeren

innerhalb von 30 Minuten zutropfen. Unter Chlorwasserstoffentwicklung steigt die Reaktionstemperatur auf 100°C an. Man erhöht die Temperatur auf 160°C und belässt das Reaktionsgemisch während $1\frac{1}{2}$ Stunden bei dieser Temperatur. Dabei wird das trübe Gemisch zur klaren Lösung. Nach Abkühlung auf 100°C werden dem Reaktionsgemisch 200 g Wasser zugetropft. Die saure Lösung wird mit 88 g 30%iger Natriumhydroxydlösung neutralisiert und die entstandene Emulsion bei 70°C filtriert. Das Filtrat wird anschliessend zur Trockene eingedampft.

Auf diese Weise erhalt man 170 g eines sehr gut wasserlöslichen Produktes, welches eine Oberflächenspannung von 58,4 dyn/cm hat.

Beispiel 2

Analog Beispiel 1 werden 282 g eines wassrigen Presskuchens enthaltend 145 g des Farbstoffes Mordant Black 11 (C.I. 14645) zusammen mit 25 g des gemäss Beispiel 1 hergestellten Natriumsalzes der Biphenylmethylnaphthalin-sulfonsaure, 5 g Poly-naphthalinmethansulfonsaure Natriumsalz, 20 g 1,2-Propylenglykol, 0,5 g 2,4,7,9-Tetramethyl-5-decin-4,7-diol und 1,5 g Natriumhydrogensulfat in 166 g Wasser vorgelegt und mit einem Ruhrer 90 Minuten lang dispergiert.

Nach Filtration durch ein 400 µm-Stahlsieb erhalt man 465 g einer homogenen, lagerstabilen Flüssigformulierung, welche einen pH-Wert von 2,0 und eine Viskosität bei Raumtemperatur (25°C/12 UpM) von 2400 mPa·s aufweist. Diese Flüssigformulierung eignet sich für die Färbung von Wolle.

Beispiel 3:

Analog Beispiel 1 werden 272,2 g eines wässrigen Presskuchens enthaltend 140,5 g des Farbstoffes Mordant Black 11 (C.I. 14645) zusammen mit 25 g des gemäss Beispiel 1 hergestellten Natriumsalzes der Biphenylmethylnaphthalin-sulfonsäure, 12,5 g einer Lösung enthaltend 5 g eines Kondensationsproduktes aus Kresolgemisch, 2-Naphthol-6-sulfonsäure Kalium-Salz, Natriumsulfit und Formaldehyd, 20 g 1,2-Propylenglykol, 0,5 g 2,4,7,9-Tetramethyl-5-decin-4,7-diol und 1,5 g Natriumhydrogensulfat in 168 g Wasser vorgelegt und mit einem Rührer 90 Minuten lang dispergiert.

Nach Filtration durch ein 400 µm-Stahlsieb erhält man 470 g einer homogenen, lagerstabilen Flüssigformulierung, welche einen pH-Wert von 2,0 und eine Viskosität bei Raumtemperatur (25°C/12 UpM) von 2250 mPa·s aufweist. Diese Flüssigformulierung eignet sich für die Färbung von Wolle.

Biespiel 4:

Analog Beispiel 1 werden 203 g eines wässrigen Presskuchens enthaltend 81,2 g des Farbstoffes Mordant Black 17 (C.I. 15705) zusammen mit 22,5 g des gemäss Beispel 1 hergestellten Natriiumsalzes der Biphenylmethylnaphtalin-sulfonsäure, 12 g 1,2-Propylenglykol, 0,3 g 2,4,7,9-Tetramethyl-5-decin-4,7-diol und 0,9 g Natrimhydrogensulfat in 61 g Wasser vorgelegt und mit einem Rührer 10 Minuten lang dispergiert. Nach Zugabe von 600 g Glasperlen (Durchmesser 2 mm) wird das Gemisch während 90 Minuten nassgemahlen.

Nach Filtration durch ein 400 µm-Stahlsieb erhält man 240 g einer homogenen und bei Raumtemperatur (25°C) dünnflüssigen (120 mPa·s/12 UpM) Farbstoffdispersion, welche sich zur Färbung von Wolle eignet.

Beispiel 5:

Verfährt man analog Beispiel 1 und verwendet anstelle von Mordant Black 11 (C.I.14645) ein Gemisch aus den Farbstoffen der Formeln

(3a) 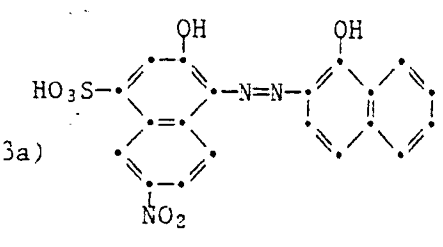 und 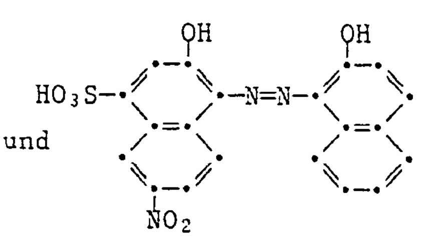 (3b)

so erhält man ebenfalls eine homogene, lagerstabile Flüssigformulierung mit gleichen physikalischen Eigenschaften. Diese Formulierung eignet sich für die Kreuzspulfärbung von Wolle.

Beispiel 6:

In einem Gefäss mit Rührer werden 163 g eines wässrigen Presskuchens enthaltend 80 g des Farbstoffes Mordant Black 11(C.I. 14645), 0,3 g Natriumhydrogensulfat, 0,1 g 2,4,7,9-Tetramethyl-5-decin-4,7-diol und 110 g Wasser vorgelegt. Die Mischung wird während einer Stunde bei 60°C erwärmt und nach dem Abkühlen auf Raumtemperatur mit 18 g des gemäss Beispiel 1 hergestellten Natriumsalzes der Biphenylmethyl-naphthalin-sulfonsäure und 9 g eines Kondensationsproduktes von Naphthalinsufosäure und Naphtholsulfosäure mit Formaldehyd (Molverhältnis 1:1:1) versetzt und während 30 Minuten dispergiert.

Nach Filtration durch ein 400 µm-Stahlsieb erhält man 285 g einer homogen lagerstabilen Flüssigformulierung, welche einen pH-Wert von 2,1 und eine Viskosität bei Raumtemperatur (25°C)/12 UpM von weniger als 2000 mPa·s aufweist. Diese Flüssigformulierung eignet sich für die Färbung von Wolle.

Anwendungsbeispiel

1 kg Kreuzspule Woll-Kammgarn wird bei 40°C bei einem Flottenverhältnis von 1:9 mit einer wässriger Flotte, die 0,8 g pro Liter eines Netzmittels und 2 % Essigsäure (80 %) enthält, während 15 % Minuten vorbehandelt. Hierauf werden 120 g der gemäss Beispiel 1 hergestellten und bei 40°C unter 5 Minuten Rühren auf 1 Liter Wasser aufgefüllten Dispersion zugegeben. Der pH-Wert des Bades beträgt 4,2. Die Badtemperatur wird mit 1,5°C pro Minute auf 98°C erhölt und 40 Minuten bei dieser Temperatur gehalten. Danach wird das Bad im Verlaufe von 10 Minuten auf 80°C abgekühlt, mit 1 % Chromkali versetzt und nach 10 Minuten mit Ameisensäure (85 %) auf einen pH-Wert von 3,5 eingestellt. Man steigert die Temperatur wieder auf 98°C und färbt weitere 40 Minuten. Nach Abkühlen auf 60°C wird die Wolle wie üblich warm und kalt gespült, abgesäuert und getrocknet. Man erhält ein schwargefärbtes Kammgarn. Die Färbung ist egal und weist gute Echtheitseigenschaften auf.

## Patentansprüche

1. Wässerige Dispersion eines sulfonierten, metallisierbaren Farbstoffes, dadurch gekennzeichnet, dass sie
(a) bezogen auf das Gesamtgewicht mindestens 10 % des sulfonierten, metallisierbaren Farbstoffes und
(b) ein sulfoniertes Kondensationsprodukt, welches durch Umsetzung einer mindestens zwei ersetzbare kernständige Wasserstoffatome aufweisenden aromatischen Verbindung in beliebiger Reihenfolge mit einer Verbindung der Formel

(1) 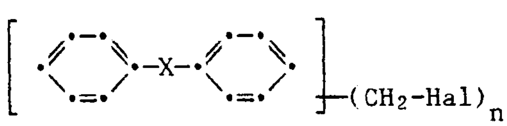

worin X die direkte Bindung oder Sauerstoff,
Hal Chlor oder Brom und
n 1 bis 4 bedeuten
und Sulfonierung erhalten worden ist, enthält.

2. Wässerige Dispersion gemäss Anspruch 1, dadurch gekennzeichnet, dass sie als Farbstoff einen Mordant Dye enthält.

3. Wässerige Dispersion gemäss Anspruch 1, dadurch gekennzeichnet, dass sie als Farbstoff Mordant Black enthält.

4. Wässerige Dispersion gemäss Anspruch 1, dadurch gekennzeichnet, dass sie als Farbstoff Mordant Black 11, C.I. 14645 enthält.

5. Wässerige Dispersion gemäss einem der Ansprüche 1 bis 4, dadurch gekennzeichnet, dass das sulfonierte Kondensationsprodukt durch Verwendung eines ein- oder mehrkernigen aromatischen Kohlenwasserstoffes, der gegebenenfalls mit Hydroxyl, Alkylgruppen mit 1 bis 4 Kohlenstoff atomen, Alkoxygruppen mit 1 bis 4 Kohlenstoffatomen oder Halogen substituiert ist, und mindestens zwei ersetzbare kernständige Wasserstoffatome aufweist, erhalten worden ist.

6. Wässerige Dispersion gemäss Anspruch 5, dadurch gekennzeichnet, dass das sulfonierte Kondensationsprodukt durch Verwendung einer Naphthalinverbindung, die gegebenenfalls mit Hydroxyl, Chlor oder Methyl substituiert ist und mindestens zwei ersetzbare, kernständige Wasserstoffatome aufweist, erhalten worden ist.

7. Wässerige Dispersion gemäss einem der Ansprüche 1 bis 6, dadurch gekennzeichnet, dass sie den Farbstoff in Mengen von 20 bis 60, vorzugsweise 25 bis 40 Gewichtsprozent, bezogen auf das Gesamtgewicht enthält.

8. Wässerige Dispersion gemäss einem der Ansprüche 1 bis 7, dadurch gekennzeichnet, dass sie 5 bis 40 Gewichtsteile des sulfonierten Kondensationsproduktes je 100 Gewichtsteile Farbstoff enthält.

9. Wässerige Dispersion gemäss einem der Ansprüche 1 bis 8, dadurch gekennzeichnet, dass sie einen pH-Wert von 1 bis 4, vorzugsweise 1,5 bis 3 hat.

10. Verfahren zur Herstellung der wässerigen Dispersion gemäss Anspruch 1, dadurch gekennzeichnet, dass man den sulfonierten, metallisierbaren Farbstoff als freie Säure oder Alkalimetallsalz in Form eines wässrigen Presskuchens bei 20 bis 70°C, vorzugsweise bei Raumtemperatur und gegebenenfalls unter Zugabe von Wasser in einer wässerigen Lösung des sulfonierten Kondensationsproduktes dispergiert.

11. Verwendung der wässerigen Dispersion gemäss einem der Ansprüche 1 bis 9 zum Färben von Carbonamidgruppenhaltigen Fasern, insbesondere von Wolle.

## Claims

1. An aqueous dispersion of a sulfonated metallizable dye which contains

a) based on the total weight at least 10% of the sulfonated metallizable dye and

b) a sulfonated condensation product obtained by reacting an aromatic compound having at least two replaceable ring-positioned hydrogen atoms in any desired order with a compound of the formula

(1) 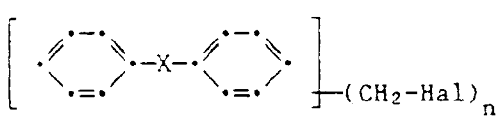

in which X is a direct bond or oxygen,

Hal is chlorine or bromine and

n is 1 to 4, and sulfonation.

2. An aqueous dispersion according to claim 1, where the dye is a mordant dye.

3. An aqueous dispersion according to claim 1, where the dye is a mordant black.

4. An aqueous dispersion according to claim 1, where the dye is Mordant Black 11, G.I. 14645.

5. An aqueous dispersion according to any one of claims 1 to 4, wherein the sulfonated condensation product has been obtained by using a monocyclic or polycyclic aromatic hydrocarbon which can be substituted by hydroxyl, alkyl groups having 1 to 4 carbon atoms, alkoxy groups having 1 to 4 carbon atoms or halogen and has at least two replaceable ring-positioned hydrogen atoms.

6. An aqueous dispersion according to claim 5, wherein the sulfonated condensation product has been obtained by using a naphthalene compound which can be substituted by hydroxyl, chlorine or methyl and has at least two replaceable ring-positioned hydrogen atoms.

7. An aqueous dispersion according to any one of claims 1 to 6, which contains the dye in amounts of 20 to 60, preferably 25 to 40, per cent by weight, based on the total weight.

8. An aqueous dispersion according to any one of claims 1 to 7, which contains 5 to 40 per cent by weight of the sulfonated condensation product per 100 parts by weight of dye.

9. An aqueous dispersion according to any one of claims 1 to 8, which has a pH of 1 to 4, preferably 1.5 to 3.

10. A process for preparing the aqueous dispersion according to claim 1, which comprises dispersing the sulfonated metallizable dye as a free acid or alkali metal salt in the form of an aqueous press cake at 20 to 70°C, preferably at room temperature with or without the addition of water, in an aqueous solution of the sulfonated condensation product.

11. A method of using the aqueous dispersion according to any one of claims 1 to 9 for dyeing carboxamido-containing fibres, in particular wool.

## Revendications

1. Dispersion aqueuse d'un colorant métallable sulfoné, **caractérisée** en ce qu'elle contient

(a) par rapport au poids total, au moins 10% du colorant métallable sulfoné, et

(b) un produit de condensation sulfoné, que l'on a obtenu en soumettant un composé aromatique comportant, sur le noyau, au moins deux atomes d'hydrogène remplaçables, à une réaction avec un composé de formule

(1) 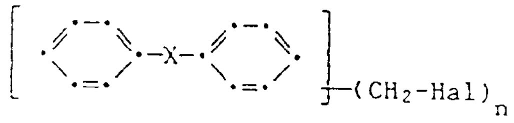

dans laquelle X représente une liaison directe ou un atome d'oxygène,
Hal représente un atome de chlore ou de brome et
n vaut de 1 à 4, et à une sulfonation, dans un ordre quelconque.

2. Dispersion aqueuse conforme à la revendication 1, **caractérisée** en ce qu'elle contient, en tant que colorant, un colorant à mordant.

3. Dispersion aqueuse conforme à la revendication 1, **caractérisée** en ce qu'elle contient, en tant que colorant, un Noir à mordant.

4. Dispersion aqueuse conforme à la revendication 1, **caractérisée** en ce qu'elle contient, en tant que colorant, du Noir à mordant 11, C.I. 14645.

5. Dispersion aqueuse conforme à l'une des revendications 1 à 4, **caractérisée** en ce que l'on a obtenu le produit de condensation sulfoné en utilisant un hydrocarbure aromatique qui comporte un ou plusieurs noyau(x), qui est éventuellement substitué par des groupes hydroxyle, alkyle comportant de 1 à 4 atomes de carbone ou alcoxy comportant de 1 à 4 atomes de carbone ou par des atomes d'halogène, et qui comporte, sur le ou les noyau(x), au moins deux atomes d'hydrogène remplaçables.

6. Dispersion aqueuse conforme à la revendication 5, **caractérisée** en ce que l'on a obtenu le produit de condensation sulfoné en utilisant un dérivé du naphtalène, éventuellement substitué par un atome de chlore ou par un groupe hydroxyle ou méthyle, et comportant, sur le noyau, au moins deux atomes d'hydrogène remplaçables.

7. Dispersion aqueuse conforme à l'une des revendications 1 à 6, **caractérisée** en ce qu'elle contient le colorant à raison de 20 à 60% en poids, de préférence de 25 à 40% en poids, par rapport au poids total.

8. Dispersion aqueuse conforme à l'une des revendications 1 à 7, **caractérisée** en ce qu'elle contient de 5 à 40 parties en poids du produit de condensation sulfoné pour 100 parties en poids du colorant.

9. Dispersion aqueuse conforme à l'une des revendications 1 à 8, **caractérisée** en ce qu'elle présente un pH valant de 1 à 4, et de préférence de 1,5 à 3.

10. Procédé de préparation d'une dispersion aqueuse conforme à la revendication 1, **caractérisé** en ce que l'on disperse le colorant métallable sulfoné, à l'état d'acide libre ou de sel de métal alcalin et se présentant sous la forme d'un tourteau hydraté, dans une solution aqueuse du produit de condensation sulfoné, à une température située entre 20 et 70°C et de préférence à la température ambiante, et le cas échéant en ajoutant de l'eau.

11. Utilisation d'une dispersion aqueuse conforme à l'une des revendications 1 à 9, pour la teinture de fibres comportant des groupes carbamides, et en particulier, pour la teinture de la laine.